Europäisches Patentamt

European Patent Office

Office européen des brevets

(11) Publication number: **0 286 294**
**A2**

# EUROPEAN PATENT APPLICATION

(21) Application number: **88302763.3**

(22) Date of filing: **29.03.88**

(51) Int. Cl.⁴ **C01B 31/30**

(30) Priority: **10.04.87 GB 8708604**

(43) Date of publication of application:
**12.10.88 Bulletin 88/41**

(84) Designated Contracting States:
**DE FR IT NL SE**

(71) Applicant: **NATIONAL RESEARCH DEVELOPMENT CORPORATION**
**101 Newington Causeway**
**London SE1 6BU(GB)**

(72) Inventor: **Grieveson, Paul**
**56 Villiers Avenue**
**Surbiton Surrey KT5 8BD(GB)**
Inventor: **Chrysanthou, Andreas**
**14 Bracken Avenue**
**London SW12 8BH(GB)**

(74) Representative: **Neville, Peter Warwick**
**Patent Department National Research**
**Development Corporation 101 Newington**
**Causeway**
**London SE1 6BU(GB)**

(54) **Making carbides of high-melting metals.**

(57) Fine-grained tungsten carbide is made direct from $WO_3$ powder, i.e. without going through the elemental metal, which would be slow and would require high temperatures. The $WO_3$ is reacted at 800C with carbon which is in a form sufficiently active to nucleate carbide in preference to the elemental metal, in this case carbon monoxide gas. The starting $WO_3$ is of 1 μm particles, and the reaction takes 2 hours, yielding WC particles of size 0.1 to 0.2 μm.

EP 0 286 294 A2

## MAKING CARBIDES OF HIGH-MELTING METALS

This invention relates to a method of making carbides of high-melting-point metals. An example of such a carbide is tungsten carbide. It has hitherto been thought that elemental metal was an essential step in making the carbide, and one conventional method involves reducing ammonium paratungstate (with hydrogen) to form elemental tungsten powder, which is then milled with carbon black and fired at 1500C. The hydrogen is expensive, the milling is inconvenient, the temperature is high and difficult, and the sheer number of steps is disadvantageous.

According to the present invention, a method of making a carbide of a transition metal, the metal being one with a melting point of over 1900C (preferably over 2600C), comprises reacting an oxide of the metal with a locally supersaturated source of carbon at a temperature not exceeding 1500C subject to the source of carbon being sufficiently active at that temperature to nucleate carbide on the oxide in preference to elemental metal.

Usable metals include niobium (melting point 2470C), molybdenum (2620C), tantalum (2850C) and tungsten (3370C) but not for example titanium (1800C) nor non-metals such as boron. The most preferred metals are tungsten and molybdenum where the reaction temperature range is preferably 750C to 920C, more preferably 800C to 900C. For tantalum and niobium, the temperature is preferably 1100C to 1500C, more preferably 1220C to 1380C. The above usable metals may be used singly or in admixture, optionally admixed with other carbide-forming materials. Mixtures of tungsten and molybdenum are especially preferred.

The source of carbon may be a gaseous atmosphere with a carbon activity greater than unity (such as carbon monoxide gas or cracked natural gas) or may be coal (if its impurities (ash) can be tolerated) or graphite catalysed with for example iron from decomposed ferric chloride (the catalysis assisting the reaction C(graphite) + $CO_2$ → 2CO). For molybdenum, for example, the carbon source should not be coal, which is too reactive. For molybdenum, and molybdenum/tungsten mixtures, graphite is preferred. For tungsten by itself, the source of carbon should however be gaseous.

In the method according to the present invention, oxide is transformed direct to carbide; elemental metal does not arise. The sublattice of metal atoms in (for example) $WO_2$ is similar to that of WC, permitting easy nucleation of WC on $WO_2$. Because many nuclei will therefore form and grow simultaneously on a single oxide particle, each to form a separable carbide crystallite, the resulting WC particles can be as small as about 0.1 - 0.2

$\mu$m when made according to the invention and therefore can produce cemented carbides of higher strength than WC particles made via the elemental metal, the latter particles even after milling being about 1 $\mu$m or larger, and strength being proportional to 1:(diameter)$^2$. With other metals also, the invention yields smaller-grained carbides. The growth of the nuclei, i.e. the conversion of the oxide to form the carbide, proceeds always by reaction of carbon monoxide gas with the oxide. Where the source of carbon is solid, this acts to replenish continuously the necessary carbon monoxide, thus: $CO_2$ (byproduct of carbide formation) + C (solid) → 2CO (available for further reaction).

The process according to the invention is capable of continuous operation. Premixed metal oxide and solid carbon can be reacted passing downwardly in a countercurrent pellet reactor (with gas flowing upwardly), the residence time in the reactor being arranged to equal the reaction time, and carbide product being removed continuously from the bottom. The other product (carbon monoxide gas) can be removed and used as a fuel to assist the process.

The invention will now be described by way of example.

A platinum resistance furnace was set up with a silica reaction tube in an argon atmosphere (unless otherwise stated).

Molybdenum trioxide (99.9% pure) preferably of sub $\mu$m size and spectroscopically pure graphite powder were used.

Samples were prepared by weighing the appropriate quantities of oxide and graphite, which were mixed and roll-milled for longer than 12 hours to allow thorough mixing. Pellets, 0.6 cm diameter, were made by pressing the mixture in an iron die. In all experiments, twice the stoichiometric quantity of carbon necessary to react with the oxygen of the oxide to produce CO and form the carbide was used, unless otherwise stated.

The sample was weighed and placed on a platinum pan which was introduced into the reaction tube, and the furnace flushed with argon.

### Example 1 - Molybdenum

Molybdenum trioxide and graphite were reacted at 820C (Example 1A) and at 890C (Example 1B). At both temperatures, incubation periods prior to the achievement of the full reaction rate were observed. Such incubation periods are common in solid-solid reactions of this type which proceed via a gaseous intermediate-phase reaction.

At 820 and 890C complete conversion to $Mo_2C$ was observed. The reaction was observed to be very temperature sensitive in that reaction was completed in about one and a half hours at 820C but took only about 20 minutes at 890C. X-ray diffraction analysis revealed that the product was $\alpha$-$Mo_2C$, of particle size about 0.2 $\mu$m (Example 1A) and about 0.15 $\mu$m (Example 1B).

From the X-ray diffraction analysis of the various intermediate samples, it was established that the trioxide was reduced to the dioxide by way of other intermediate Magneli-type phases and then molybdenum carbide was produced directly from the oxide without any observation of the production of molybdenum metal.

To speed the reaction 5% $FeCl_3$ as a catalyst for the carbon was added to further samples. At 820C (Example 1C), reaction was complete in about 20 minutes and at 890C (Example 1D) within 7 minutes. The resulting $Mo_2C$ particle sizes were about 0.15 $\mu$m (Example 1C) and about 0.1 $\mu$m (Example 1D). If reduction/carburisation of $MoO_3$ occurs via a gaseous intermediate reaction involving CO, this improvement could be due to the $FeCl_3$ forming adsorbed iron on the carbon to catalyse the reaction $CO_2$ + C yields 2CO.

Using coal (instead of graphite) with molybdenum trioxide at 820C and 890C, complete carburisation to $Mo_2C$ took up to 20 hours. Coal being more reactive than catalysed graphite, the reaction mechanism now included formation of molybdenum metal thus, $MoO_3 \rightarrow MoO_2 \rightarrow Mo \rightarrow Mo_2C$, which is not according to the invention.

Molybdenum trioxide in another example (1E) according to the invention was reacted at 820C with carbon in the form of carbon monoxide gas; reaction to form molybdenum, carbide (particle size about 0.2 $\mu$m) was complete in 1 to $1\frac{1}{2}$ hours.

### Example 2 - Tungsten

$WO_3$ powder of 1 $\mu$m particle size was treated with carbon in the form of carbon monoxide at 800C. Reaction to form WC (particle size 0.1 to 0.2 $\mu$m) proceeded rapidly, taking about 2 hours to completion. Above 900C, where the reaction route is via elemental metal, reaction is much slower, not regaining even the 800C speed until 1120C (or, using coal, until above 1200C). That route is, of course, not according to the invention. Below 900C but using carbon in the form of graphite or coal is also not according to the invention because the carbon is insufficiently active to nucleate carbide; indeed no reaction occurs, and even at 1053C reaction is slow, taking days and following the sequence (as determined by X-ray diffraction) $WO_3$ + $WO_2 \rightarrow W \rightarrow W_2C$, the last step starting only when all oxygen had been removed from the system.

### Example 3 - Niobium

$Nb_2O_5$ was reacted with coal at 1310C. Reaction to form NbC of particle size about 1 $\mu$m was complete in three and a half hours. From X-ray diffraction examination, $Nb_2O_5$ was deduced to be rapidly reduced to $NbO_2$, which was directly converted to NbC.

An increase in the reaction rate was observed when the reaction took place in a closed graphite crucible. This suggests that the gaseous product CO was an essential intermediary once again and is retained in the crucible. Using only the stoichiometrically necessary amount of carbon in the form of coal, complete conversion to NbC (particle size about 1 $\mu$m) was achieved in 3 hours at 1260C.

Outside the scope of the invention, reaction between $Nb_2O_5$ and graphite was uselessly slow up to at least 1200C, and between $Nb_2O_5$ and carbon monoxide at 1100C took 36 hours.

### Example 4 - Tantalum

Reaction between $Ta_2O_5$ and coal is successful at 1350C, and takes 2 hours to completion at 1400C. Graphite is slightly slower than coal and, overall, tantalum behaves similarly to niobium (Example 3). Resulting particle size is about 1 $\mu$m.

### Claims

1. A method of making a carbide of a transition metal, which metal has a melting point of over 1900C,

comprising reacting an oxide of the metal with a locally supersaturated source of carbon at a temperature not exceeding 1500C subject to the source of carbon being sufficiently active at that temperature to nucleate carbide on the oxide in preference to elemental metal.

2. A method according to Claim 1, wherein the transition metal is niobium or tantalum.

3. A method according to Claim 2, wherein the temperature at which the oxide is reacted is 1100C to 1500C.

4. A method according to Claim 3, wherein the said temperature is 1220C to 1380C.

5. A method according to Claim 1, wherein the transition metal has a melting point of over 2600C.

6. A method according to Claim 5, wherein the transition metal is tungsten or molybdenum or a mixture of the two.

7. A method according to Claim 6, wherein the temperature at which the oxide is reacted is 750C to 920C.

8. A method according to Claim 7, wherein the said temperature is 800C to 900C.

9. A method according to any preceding claim, wherein the source of carbon is a gaseous atmosphere with a carbon activity greater than unity.

10. A method according to Claim 9, wherein said source is carbon monoxide gas or cracked natural gas.

11. A method according to any of Claims 1 to 8, wherein the source of carbon is coal or catalysed graphite.

12. A method according to Claim 11, wherein the graphite has been catalysed by decomposed ferric chloride.

13. A method according to Claim 1, substantially as hereinbefore described with reference to Example 1, Example 2, Example 3 or Example 4 of the accompanying drawings.